# FASCICULE DE BREVET EUROPEEN

(11) **EP 4 028 237 B1**
(45) Date de publication et mention de la délivrance du brevet: **21.06.2023**
(21) Numéro de dépôt: 20768343.4
(22) Date de dépôt: 09.09.2020
(51) Int. Cl.: B29C 49/48, B29C 49/06, B29C 49/78, B29K 67/00, B29L 31/00

(54) **PROCEDE DE FABRICATION D'UN RECIPIENT EN MATIERE PLASTIQUE, COMPRENANT UN REFROIDISSEMENT NON REFRIGERE D'UN FOND DE MOULE**
VERFAHREN ZUR HERSTELLUNG EINES KUNSTSTOFFBEHÄLTERS MIT UNGEKÜHLTER KÜHLUNG EINES FORMBAUTEILS
METHOD FOR MANUFACTURING A PLASTIC CONTAINER, COMPRISING NON-REFRIGERATED COOLING OF A MOULD BASE

(30) Priorité: 11.09.2019 FR 1909982
(43) Date de publication de la demande: 20.07.2022
(73) Titulaire: Sidel Participations, 76930 Octeville-sur-Mer (FR)
(72) Inventeur: DERRIEN, Mikael, 76930 Octeville-sur-Mer (FR)
(74) Mandataire: Sidel Group
(86) Numéro de dépôt international: PCT/EP2020/075218
(87) Numéro de publication internationale: WO 2021/048217

(56) Documents cités:
- EP-A1- 2 065 164
- US-A1- 2012 052 148
- US-A1- 2017 173 845

## Description

Le domaine de l'invention est celui de la conception et de la fabrication de récipients en matière plastique à partir de préformes.

Plus précisément, l'invention concerne un procédé et une machine de fabrication pour la réalisation de récipients en matière plastique, présentant une étape de refroidissement d'un fond de moule dans laquelle un flux caloporteur est injecté à l'intérieur d'une cavité du fond de moule.

Les documents US2017/173845A1, US2012/052148A1 et EP2065164A1 décrivent des procédés et des machines de fabrication de récipients selon l'art antérieur.

Classiquement, une préforme comprend un corps creux, généralement cylindrique de révolution, un col qui constitue le buvant du récipient à former, et un fond qui ferme le corps à l'opposé du col. Le fond est habituellement hémisphérique ou tout au moins symétrique de révolution par rapport à l'axe longitudinal de la préforme.

Pour réaliser une préforme, il est utilisé un moule d'injection qui comporte un noyau d'injection (déterminant la forme de l'intérieur de la préforme) et une paroi extérieure (déterminant l'extérieur de la préforme). Le volume interne déterminé par l'agencement du noyau et de la paroi extérieure détermine la forme finale de la préforme. La matière plastique constitutive de la préforme est injectée à une très haute température (la matière est fluide) et à une pression élevée dans le moule d'injection par un conduit qui débouche dans ce volume, au travers de la paroi extérieure, à un emplacement de la paroi centré sur le fond de la préforme.

La technique classique de fabrication d'un récipient à partir d'une préforme consiste à introduire la préforme, préalablement chauffée à l'intérieur d'une unité de chauffe, à une température supérieure à la température de transition vitreuse de la matière (environ 80 degrés Celsius dans le cas du PET), dans un moule muni d'une paroi définissant une cavité à l'empreinte du récipient, et à injecter dans la préforme, par une tuyère, un fluide tel qu'un gaz (généralement de l'air) sous pression pour plaquer la matière de la préforme contre la paroi du moule.

Le moule peut être constitué de deux demi-coques et d'un fond de moule.

Ce fond de moule, au fur et à mesure de la fabrication des récipients, voit sa température augmenter.

L'augmentation de la température du fond de moule peut provoquer des malformations des fonds des récipients formés. Il est alors procédé à un refroidissement des fonds de moule pour contrôler leur température et maitriser la forme des récipients obtenus. En effet, en l'absence d'un refroidissement du fond de moule, les fonds des récipients formés s'affaisseraient.

A cet effet, les fonds de moule sont pourvus d'une cavité, ou plus spécifiquement de canaux (entendus ci-après sous l'expression « une cavité »), dans laquelle, lors d'une étape de refroidissement du fond du moule, un fluide caloporteur est mis en circulation.

La pratique tend à refroidir le plus possible les fonds de moule pour que les fonds des récipients soient également refroidis le plus possible.

Les unités de formage de récipient comprennent ainsi un refroidisseur conçu pour réfrigérer le fluide caloporteur destiné à circuler dans la cavité du fond de moule.

Le flux caloporteur est ainsi réfrigéré à une température d'environ 12°C par le refroidisseur, avant d'être envoyé dans la cavité du fond du moule par l'intermédiaire d'une conduite d'amenée qui débouche dans la cavité.

Un tel refroidissement du fond de moule permet l'obtention d'une bouteille présentant les caractéristiques recherchées, propre à sa commercialisation.

Toutefois, l'usage d'un refroidisseur entraîne une consommation d'énergie non négligeable.

L'invention a notamment pour objectif de pallier les inconvénients de l'art antérieur.

Plus précisément, l'invention a pour objectif de proposer un procédé de fabrication et une machine de fabrication permettant l'obtention d'un récipient commercialisable, tout en réduisant la consommation d'énergie nécessaire à la fabrication du récipient par rapport à celle consommée lors de la fabrication de récipient avec un procédé et une machine de fabrication selon l'art antérieur.

L'invention a également pour objectif de fournir un tel procédé qui permette de simplifier le procédé de fabrication et la machine de fabrication par rapport à ceux selon l'art antérieur.

Ces objectifs, ainsi que d'autres qui apparaîtront par la suite, sont atteints grâce à l'invention qui a pour objet un procédé de fabrication de récipients par soufflage ou étirage-soufflage à partir de préformes en matière plastique, le procédé comprenant une étape de refroidissement d'un fond de moule par circulation d'un fluide caloporteur à l'intérieur d'une cavité du fond de moule, caractérisé en ce que l'étape de refroidissement d'un fond de moule est réalisée avec un fluide caloporteur non-réfrigéré et à une température inférieure ou égale à 30°C.

Contrairement au préjugé technique de l'art antérieur comme quoi il est absolument nécessaire de refroidir le plus possible les fonds des récipients formés dans les moules, il a été découvert que le fluide caloporteur utilisé par l'étape de refroidissement du fond de moule pouvait être non-réfrigéré, tout en présentant une température inférieure ou égale à 30°C.

De ce fait, il n'est pas nécessaire d'utiliser un refroidisseur pour réfrigérer le fluide caloporteur utilisé lors de l'étape de refroidissement du fond de moule.

Par exemple, un fluide caloporteur à température ambiante, bien entendu inférieure ou égale à 30°C, peut directement être utilisé dans l'étape de refroidissement, ce qui évite la consommation d'énergie induite par le fonctionnement du refroidisseur.

Un tel fluide caloporteur non-réfrigéré et à une température inférieure ou égale à 30 °C permet en outre d'obtenir un récipient présentant de bonnes caractéristiques ou, en d'autres termes, ne présentant pas de malformations incompatibles avec l'usage et la commercialisation dudit récipient.

De plus, il a été remarqué de manière surprenante que des récipients, obtenus à l'aide du procédé de fabrication selon l'invention, présentent une bonne géométrie du fond du récipient car les différences thermiques obtenues sur la périphérie de celui-ci peuvent contribuer, de par l'effet de rétreint, à générer un effet de levier vers l'intérieur du fond du récipient. Ceci implique une limitation de l'effet de l'affaissement du fond de la bouteille au sortir d'une unité de formage de récipient dans laquelle les préformes sont soufflées.

Cet effet permet d'augmenter le nombre de récipients considérés comme respectant les critères de qualité attendus par rapport à ceux obtenus dans un procédé de fabrication de récipient selon l'art antérieur.

Il est noté qu'au-delà de 30 degrés Celsius, il se produit un manque de refroidissement des fonds des récipients et donc un affaissement du fond de ces récipients.

Préférentiellement, l'étape de refroidissement d'un fond de moule est réalisée avec un fluide caloporteur à une température inférieure ou égale à 25°C.

Jusqu'à 25°C il a été constaté un transfert optimal des calories lors du refroidissement des fonds de moule.

Avantageusement, l'étape de refroidissement d'un fond de moule est réalisée avec un fluide caloporteur à une température supérieure ou égale à 18°C.

Aux environs de 18°C, le fluide caloporteur peut être simplement de l'eau issue d'un réseau de distribution d'eau classique.

De façon plus efficace, l'étape de refroidissement d'un fond de moule est réalisée avec un fluide caloporteur à une température supérieure ou égale à 21°C.

Une telle température du fluide caloporteur permet un bon refroidissement des fonds de moule tout en correspondant à une température moyenne constatée d'une eau captée dans un réseau de distribution d'eau classique et après son transfert dans la tuyauterie d'une machine de fabrication de récipient en matière plastique.

Selon un mode de réalisation préféré, l'étape de refroidissement d'un fond de moule est réalisée avec un fluide caloporteur à une température égale à 25°C.

Un telle température de fluide caloporteur optimise alors le rapport entre le refroidissement des fonds de moule, l'énergie utilisée par le procédé, et la forme finale des récipients obtenus.

Avantageusement, le fluide caloporteur est également utilisé pour une étape de refroidissement de moyens de protection de cols des préformes dans une unité de chauffe située en amont de la partie de machine comprenant le ou les moules.

De cette manière, le même fluide caloporteur est utilisé pour l'étape de refroidissement des moyens de protection et des fonds de moule. L'utilisation d'une température d'au moins 21°C pour le fluide caloporteur pour le refroidissement des moyens de protection des cols dans préformes est importante pour éviter l'apparition de condensation dans l'unité de chauffe.

Selon l'art antérieur, le fluide caloporteur utilisé pour refroidir les moyens de protection des cols des préformes de l'unité de chauffe est réchauffé à 25°C. De ce fait, le fluide caloporteur non-réfrigéré est avantageusement également utilisé sans qu'il n'ait besoin d'être réchauffé comme dans l'art antérieur.

Avantageusement, le fluide caloporteur est également utilisé pour une étape de refroidissement de coquilles du moule, c'est-à-dire les parties de moule servant au formage des corps et des épaules des récipients.

Le refroidissement du moule est ainsi également réalisé avec un fluide caloporteur non-réfrigéré, évitant le recours à un refroidisseur.

L'invention a également pour objet une machine de fabrication de récipients, par soufflage ou étirage-soufflage à partir de préformes en matière plastique, la machine de fabrication comprenant :
- un moule présentant un fond de moule dans lequel est ménagé une cavité ;
- une conduite d'amenée du fluide caloporteur débouchant dans la cavité ;
- une conduite de sortie du fluide caloporteur de la cavité ;
caractérisée en ce qu'elle comprend des moyens d'approvisionnement de la conduite d'amenée par un fluide caloporteur non-réfrigéré et à une température inférieure ou égale à 30 degrés Celsius.

La machine de fabrication selon l'invention met en oeuvre le procédé selon l'invention précédemment décrit.

Ainsi, les caractéristiques du procédé et les avantages relatifs peuvent également être appliqués à la machine de fabrication selon l'invention.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[fig.1] est une représentation schématique illustrant une machine de fabrication de récipients mettant en oeuvre un procédé de fabrication selon l'invention ;
[fig.2] est une illustration schématique, de dessus, du fond d'un récipient formé ;
[fig.3] est une courbe illustrant les différences de températures relevées au niveau du fond d'un récipient selon un procédé selon l'invention et un procédé selon l'art antérieur, avec deux températures de fluide caloporteur différentes.

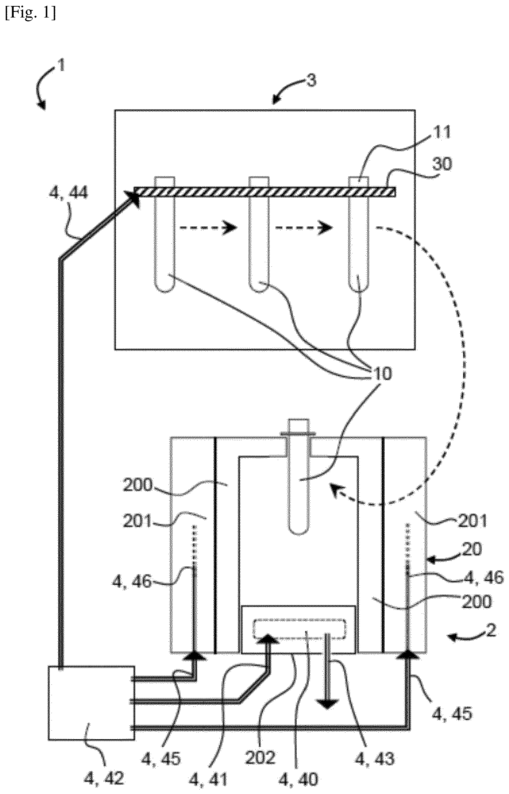

En référence à la figure 1 et selon le principe de l'invention, une machine 1 de fabrication de récipients par soufflage ou étirage-soufflage à partir de préformes 10 est illustrée. Cette machine 1 de fabrication met en oeuvre le procédé selon l'invention qui permet de fabriquer des récipients par soufflage ou étirage-soufflage à partir de préformes 10 en matière plastique.

Cette machine 1 de fabrication comprend une unité de chauffe 3 des préformes 10 et une unité de formage 2.

Pour la fabrication de récipients par soufflage ou étirage-soufflage, les préformes 10 sont chauffées dans l'unité de chauffe 3, puis disposées chacune dans un moule 20 de l'unité de formage 2 où elles sont soufflées, ou étirées et soufflées.

Selon le présent mode de réalisation, le moule 20 comprend :
- deux coquilles 200 qui, associées forment l'empreinte du corps d'un récipient ;
- deux supports 201 de coquille 200 ;
- un fond 202 de moule 20, qui comporte l'empreinte du fond d'un récipient.

Du fait que les préformes 10 sont chauffées, les fonds 202 de moule 20 ont tendance à s'échauffer lorsque le fond des récipients formés vient à leur contact lors de la fabrication des récipients.

La machine 1 de fabrication comprend alors un système de refroidissement 4 destiné à refroidir, entre autres, les fonds 202 de moule 20.

Les fonds 202 de moule 20 comprennent une cavité 40 destinée à recevoir un fluide caloporteur pour les refroidir.

La machine 1 de fabrication, et plus spécifiquement le système de refroidissement 4, comprend :
- une conduite d'amenée 41 débouchant dans la cavité 40 pour fournir le fluide caloporteur au fond 202 de moule 20 ;
- une conduite de sortie 43 de la cavité 40 ;
- des moyens d'approvisionnement 42 de la conduite d'amenée 41 avec le fluide caloporteur.

L'expression « cavité » désigne tout type de cavité ou de circuit tel que des canaux ménagés dans les fonds 202 de moule 20, et destinés à permettre leur refroidissement.

Le procédé de fabrication comprend en conséquence une étape de refroidissement du fond 202 de moule 20 grâce à la circulation du fluide caloporteur à l'intérieur de la cavité 40 du fond 202 de moule 20.

Selon le principe de l'invention, cette étape de refroidissement du fond 202 de moule est réalisée avec un fluide caloporteur qui est non-réfrigéré, et qui présente une température inférieure ou égale à 30°C.

Grâce à cette caractéristique du fluide caloporteur, le procédé de fabrication selon l'invention ne nécessite pas une étape préalable de réfrigération du fluide caloporteur.

De ce fait, la machine 1 de fabrication selon l'invention ne comprend pas de refroidisseur destiné à refroidir le fluide caloporteur, ou dédié au refroidissement du fluide caloporteur.

Des tests ont permis de constater qu'un fluide caloporteur non-réfrigéré et à une température inférieure ou égale à 30°C permet l'obtention d'un refroidissement adéquat du fond 202 de moule 20.

En effet, plus la cadence de production des récipients (pouvant atteindre des taux bien supérieurs à 2 500 bouteilles/moules/heure) et la pression de soufflage diminuent, alors plus le temps de contact du matériau constituant le récipient (par exemple le PET) avec le fond du moule diminue et, par conséquent, plus la température de la périphérie du fond du récipient tend à augmenter.

Ceci est dû au fait que cette périphérie du fond du récipient est la dernière partie du récipient formé lors du processus de soufflage du récipient dans le moule 20 et qu'elle correspond à la partie du fond du récipient qui a le temps de contact le plus court avec le fond de moule.

Cela montre, au vu des températures atteintes sur cette périphérie du fond des récipients, que le refroidissement à 10°C du fond de moule n'est pas forcément nécessaire dans ces conditions de production car le matériau constituant le récipient n'a pas le temps d'atteindre la température de régulation du fond de moule.

Il est à noter également que, plus la cadence de fabrication de récipients est augmentée, moins l'effet de la différence de température du fluide caloporteur utilisé pour refroidir le fond de moule est visible sur les récipients formés.

Au-delà de 30°C, il a été toutefois constaté un manque de refroidissement des fonds des récipients formé qui peuvent alors parfois présenter un affaissement de leur voute.

Avantageusement, la température du fluide caloporteur est supérieure ou égale à 18°C, et de manière plus avantageuse supérieure ou égale à 21°C. De cette manière, le fluide caloporteur peut provenir directement d'un réseau de distribution d'eau du lieu d'implantation de la machine 1 de fabrication.

Préférentiellement le fluide caloporteur est à une température qui est inférieure ou égale à 25°C, et encore plus préférentiellement égale à 25°C.

**[Tableaux 1]**

| Taux de production (en bouteille par heure par moule) | Température du fluide caloporteur | Débit du fluide caloporteur | Profondeur du fond (en millimètres) | | | | | |
|---|---|---|---|---|---|---|---|---|
| | | | A la jonction (BB) des branches | | | Au point d'injection (PI) | | |
| | | | mi n | moyenne | max | mi n | moyenne | max |
| 2500 | 13°C | 0,7m³.h⁻¹ | 3,9 | 4,0 | 4,1 | 8,2 | 8,3 | 8,4 |
| | | 0,2m³.h⁻¹ | 3,9 | 4,0 | 4,2 | 7,7 | 8,0 | 8,1 |
| | 25°C | 0,7m³.h⁻¹ | 3,9 | 4,0 | 4,3 | 7,4 | 7,7 | 8,0 |
| | | 0,2m³.h⁻¹ | 3,9 | 4,0 | 4,2 | 7,4 | 7,8 | 8,2 |
| 2700 | 35°C | 0,2m³.h⁻¹ | 3,9 | 4,2 | 4,3 | 6,1 | 6,4 | 6,9 |

Le tableau ci-dessus illustre, pour un récipient d'une contenance de 50 centilitres, des différences de profondeurs de fonds 12 de récipients produits à l'aide de l'installation et du procédé selon l'invention, pour une production à 2 500 et 2 700 bouteilles par heure et par moule, et avec un fluide caloporteur à 13°C, 25°C et 35°C circulant à deux débits différents dans les cavités des fonds 204 de moule.

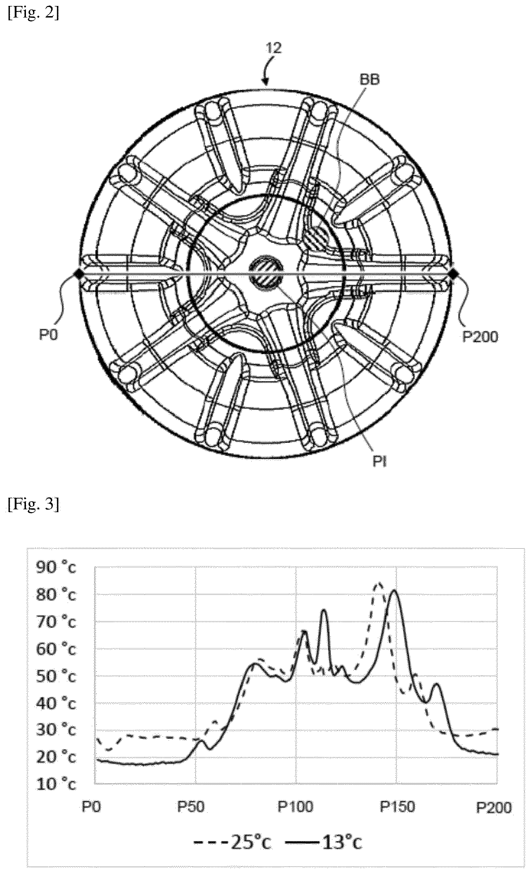

La figure 2 illustre un fond 12 de récipient sur lequel sont matérialisés à l'aide de cercles hachurés, d'une part, l'emplacement d'une jonction BB entre deux branches successives d'un fond 12 de récipient et, d'autre part, le point d'injection PI qui est situé au centre du fond 12 de récipient.

Ces résultats permettent de déterminer qu'à 25°C, les profondeurs de fonds 12 de récipient mesurées sont quasiment les mêmes qu'à 10°C. Les bouteilles produites avec un fluide caloporteur à 25°C sont donc considérées comme bonnes.

Ces résultats permettent également de démontrer qu'à 35°C, les profondeurs mesurées au centre du fond, au point d'injection PI, sont inférieures à celles mesurées à 13°C et 25°C, mais que les profondeurs figurant à la jonction BB de deux branches sont supérieures, montrant ainsi l'effet de levier qui, avec un léger rétreint périphérique, permet d'augmenter la garde (c'est-à-dire la mesure de la profondeur du fond du récipient) à ce point.

Cependant, au-delà de 30°C, il peut être constaté un effet négatif sur la paroi-même du corps du récipient, située au-dessus du fond du récipient, car cette partie présente un temps de contact supérieur avec le fond de moule. Cet effet négatif correspond à une déformation indésirable de la paroi du corps du récipient.

Sur la figure 2, un profil transversal du fond 12 du récipient formé est identifié, selon le plan P0-P200.

Les courbes de la figure 3 correspondent à des relevés de températures sur le profil transversal. Ces températures sont relevées sur des récipients au sortir de l'unité de formage 2.

Ces relevés sont obtenus sur une même machine, pour une même cadence, pour le même type de récipient. La courbe avec un fluide caloporteur réfrigéré à 13°C correspond au procédé selon l'art antérieur, et la courbe avec un fluide caloporteur non-réfrigéré à 25°C correspond au procédé selon l'invention.

L'analyse de ces courbes démontre que les différences de température les plus notables se situent vers la partie périphérique du fond 12 du récipient (zones P0-P50 et P150-P200).

Il est à noter que le matériau constituant le récipient, le PET, est un bon isolant thermique.

Aussi, le centre du récipient, de part et d'autre de la zone P100, plus épais, continue de chauffer le reste du fond 12 du récipient par diffusion de la température en sortie de l'étape de soufflage du récipient dans le moule. Ce transfert calorique s'effectue depuis l'intérieur du récipient, alors que c'est la peau extérieure du récipient qui est refroidie. En d'autres termes, la peau extérieure du récipient se réchauffe sous l'effet de ce transfert calorique.

Une différence de 2°C à 7°C sur l'extérieur du récipient n'a, au final, que peu d'incidence sur le récipient final puisque la peau extérieure tend à se réchauffer naturellement. Ce réchauffement se produit très rapidement puisque cette zone est normalement étirée, donc de faible épaisseur, et que la température dans cette zone est très inférieure à la température de transition vitreuse.

En conclusion, la diminution du refroidissement entre un procédé de refroidissement du fond 202 de moule 20 avec un fluide caloporteur réfrigéré, selon l'art antérieur, et avec un fluide caloporteur non réfrigéré, à 25°C, n'a que peu de conséquences, notamment pour les cadences de production élevées.

Selon le présent mode de réalisation illustré par la figure 1, les coquilles 200 du moule 20 et des moyens 30 de protection des cols 11 des préformes 10 sont également refroidies.

Pour refroidir les coquilles 200, le système de refroidissement 4 comprend des canalisations 46 ménagées dans les supports 201 de coquille 200.

Les moyens d'approvisionnement 42 en fluide caloporteur sont couplés aux canalisations 46 par le biais de premiers moyens de canalisation 45 du fluide caloporteur.

Le fluide caloporteur circulant dans les supports 201 de coquille 200 permet alors le refroidissement des coquilles 200 par transfert des calories des coquilles 200 jusqu'aux supports 201, puis jusqu'au fluide caloporteur.

Dans l'unité de chauffe 3, les moyens 30 de protection ont pour objectif d'éviter la surchauffe des cols 11 des préformes 10, lorsque le corps des préformes est chauffé.

Ces moyens de protection prennent usuellement la forme de deux rampes de protection parallèles l'une à l'autre.

Les moyens d'approvisionnement 42 en fluide caloporteur sont ainsi également couplés aux moyens 30 de protection des cols 11 par le biais de deuxièmes moyens de canalisation 44 du fluide caloporteur.

La température préférée du fluide caloporteur de 25°C se révèle alors particulièrement adaptée.

En effet, vu les températures des unités de chauffe, l'utilisation d'un fluide caloporteur réfrigéré pour refroidir les rampes de protection entrainerait l'apparition de condensation dans l'unité de chauffe, ce qui est particulièrement indésirable.

En conséquence, l'utilisation d'un fluide caloporteur à 25°C, et a minima à une température supérieure ou égale à 21°C permet d'éviter ou de limiter l'apparition de condensation.

A 25°C, le fluide caloporteur peut ainsi être utilisé pour refroidir les moules 20 (dont les fonds 202 de moule, et les coquilles 200 indirectement) de l'unité de formage 2, et les moyens de protection 30 des cols 11 des préformes 10 dans l'unité de chauffe 3.

## Revendications

1. Procédé de fabrication de récipients par soufflage ou étirage soufflage à partir de préformes (10) en matière plastique, le procédé comprenant une étape de refroidissement d'un fond (202) de moule (20) par circulation d'un fluide caloporteur à l'intérieur d'une cavité (40) du fond (202) de moule (20),
**caractérisé en ce que** l'étape de refroidissement d'un fond (202) de moule (20) est réalisée avec un fluide caloporteur non-réfrigéré et à une température inférieure ou égale à 30°C.

2. Procédé selon la revendication précédente, **caractérisé en ce que** l'étape de refroidissement d'un fond (202) de moule (20) est réalisée avec un fluide caloporteur à une température inférieure ou égale à 25°C.

3. Procédé selon l'une quelconque des revendications précédentes, **caractérisé en ce que** l'étape de refroidissement d'un fond (202) de moule (20) est réalisée avec un fluide caloporteur à une température supérieure ou égale à 18°C.

4. Procédé selon la revendication 3 précédente, **caractérisé en ce que** l'étape de refroidissement d'un fond (202) de moule (20) est réalisée avec un fluide caloporteur à une température supérieure ou égale à 21°C.

5. Procédé selon la revendication 1, **caractérisé en ce que** l'étape de refroidissement d'un fond (202) de moule (20) est réalisée avec un fluide caloporteur à une température égale à 25°C.

6. Procédé selon la revendication 4 ou la revendication 5, **caractérisé en ce que** le fluide caloporteur est également utilisé pour une étape de refroidissement de moyens (30) de protection des cols (11) des préformes (10) dans une unité de chauffe (3).

7. Procédé selon l'une quelconque des revendications précédentes, **caractérisé en ce que** le fluide caloporteur est également utilisé pour une étape de refroidissement de coquilles (200) du moule (20).

8. Machine (1) de fabrication de récipients par soufflage ou étirage soufflage à partir de préformes (10) en matière plastique, la machine (1) de fabrication comprenant :
- un moule (20) présentant un fond (202) de moule (20) dans lequel est ménagée une cavité (40) ;
- une conduite d'amenée (41) débouchant dans la cavité (40) ;
- une conduite de sortie (43) de la cavité (40) ;
- des moyens d'approvisionnement (42) de la conduite d'amenée (41) par un fluide caloporteur,
**caractérisée en ce qu'**elle met en oeuvre le procédé selon l'une quelconque des revendications précédentes.

## Patentansprüche

1. Verfahren zur Herstellung von Behältern durch Blasen oder Streckblasen aus Vorformlingen (10) aus Kunststoff, wobei das Verfahren einen Schritt des Kühlens eines Bodens (202) einer Form (20) durch Zirkulation eines Wärmeträgerfluids innerhalb eines Hohlraums (40) des Bodens (202) einer Form (20) umfasst,
**dadurch gekennzeichnet, dass** der Schritt des Kühlens eines Bodens (202) einer Form (20) mit einem nicht gekühlten Wärmeträgerfluid und bei einer Temperatur kleiner oder gleich 30 °C ausgeführt wird.

2. Verfahren nach dem vorhergehenden Anspruch, **dadurch gekennzeichnet, dass** der Schritt des Kühlens eines Bodens (202) einer Form (20) mit einem Wärmeträgerfluid bei einer Temperatur kleiner oder gleich 25 °C ausgeführt wird.

3. Verfahren nach einem der vorhergehenden Ansprüche, **dadurch gekennzeichnet, dass** der Schritt des Kühlens eines Bodens (202) einer Form (20) mit einem Wärmeträgerfluid bei einer Temperatur größer oder gleich 18 °C ausgeführt wird.

4. Verfahren nach dem vorhergehenden Anspruch 3, **dadurch gekennzeichnet, dass** der Schritt des Kühlens eines Bodens (202) einer Form (20) mit einem Wärmeträgerfluid bei einer Temperatur größer oder gleich 21 °C ausgeführt wird.

5. Verfahren nach Anspruch 1, **dadurch gekennzeichnet, dass** der Schritt des Kühlens eines Bodens (202) einer Form (20) mit einem Wärmeträgerfluid bei einer Temperatur von 25 °C ausgeführt wird.

6. Verfahren nach Anspruch 4 oder Anspruch 5, **dadurch gekennzeichnet, dass** das Wärmeträgerfluid auch für einen Schritt des Kühlens von Mitteln (30) zum Schutz der Hälse (11) der Vorformlinge (10) in einer Heizeinheit (3) verwendet wird.

7. Verfahren nach einem der vorhergehenden Ansprüche, **dadurch gekennzeichnet, dass** das Wärmeträgerfluid auch für einen Schritt des Kühlens von Schalen (200) der Form (20) verwendet wird.

8. Maschine (1) zur Herstellung von Behältern durch Blasen oder Streckblasen aus Vorformlingen (10) aus Kunststoff, wobei die Maschine (1) zur Herstellung umfasst:
- eine Form (20), die einen Boden (202) der Form (20) aufweist, in dem ein Hohlraum (40) ausgebildet ist;
- eine Zuführleitung (41), die in den Hohlraum (40) mündet;
- eine Ausgangsleitung (43) des Hohlraums (40);
- Mittel zum Versorgen (42) der Zuführleitung (41) mit einem Wärmeträgerfluid,
**dadurch gekennzeichnet, dass** sie das Verfahren nach einem der vorhergehenden Ansprüche umsetzt.

## Claims

1. Method for manufacturing containers by blow-moulding or stretch blow-moulding from plastic preforms (10), the method comprising a step of cooling a bottom (202) of a mould (20) by circulating a heat-transfer fluid inside a cavity (40) in the bottom (202) of the mould (20),
**characterized in that** the step of cooling a bottom (202) of the mould (20) is carried out with a non-refrigerated heat-transfer fluid and at a temperature less than or equal to 30°C.

2. Method according to the preceding claim, **characterized in that** the step of cooling a bottom (202) of the mould (20) is carried out with a heat-transfer fluid at a temperature less than or equal to 25°C.

3. Method according to either one of the preceding claims, **characterized in that** the step of cooling a bottom (202) of the mould (20) is carried out with a heat-transfer fluid at a temperature greater than or equal to 18°C.

4. Method according to the preceding Claim 3, **characterized in that** the step of cooling a bottom (202) of the mould (20) is carried out with a heat-transfer fluid at a temperature greater than or equal to 21°C.

5. Method according to Claim 1, **characterized in that** the step of cooling a bottom (202) of the mould (20) is carried out with a heat-transfer fluid at a temperature equal to 25°C.

6. Method according to Claim 4 or Claim 5, **characterized in that** the heat-transfer fluid is also used for a step of cooling means (30) for protecting the necks (11) of the preforms (10) in a heating unit (3).

7. Method according to any one of the preceding claims, **characterized in that** the heat-transfer fluid is also used for a step of cooling shells (200) of the mould (20).

8. Machine (1) for manufacturing containers by blow-moulding or stretch blow-moulding from plastic preforms (10), the manufacturing machine (1) comprising:
- a mould (20) having a mould (20) bottom (202) in which a cavity (40) is formed;
- a feed pipe (41) opening into the cavity (40) ;
- an outlet pipe (43) from the cavity (40);
- means (42) for supplying the feed pipe (41) with a heat-transfer fluid,
**characterized in that** it implements the method according to any one of the preceding claims.
